# EUROPÄISCHE PATENTANMELDUNG

(11) **EP 1 164 114 A2**
(43) Veröffentlichungstag der Anmeldung: **19.12.2001**
(21) Anmeldenummer: 01112517.6
(22) Anmeldetag: 23.05.2001
(51) Int. Cl.: C04B 35/571, C04B 35/589, C04B 35/528, C04B 35/14, C04B 35/634, F16C 33/04

(54) **Formteil aus von Polymeren abgeleiteter Keramik**

(30) Priorität: 17.06.2000 DE 10030011
(71) Anmelder: SGL CARBON AG, 65203 Wiesbaden (DE)
(72) Erfinder: Greil, Peter, Prof. Dr., 91085 Weisendorf (DE); Dernovsek, Oliver, Dipl.-Ing., 81669 München (DE); Güther, Hans-Michael, Dipl.-Ing., 61462 Königstein (DE); Wislsperger, Ulrich, Dipl.-Ing., 53175 Bonn (DE)

(57) **Zusammenfassung**

Ein Formteil aus einer von Polymeren abgeleitete Keramik, die als Verbundkörper eine ein- oder mehrphasige, amorphe, teilkristalline oder kristalline Matrix aus Siliziumcarbid (SiC), Siliziumnitrid (Si₃N₄), Silizumdioxid(SiO₂) oder aus Mischungen davon aufweist, wobei die Matrix Graphiteinlagerungen beinhaltet und die Dichte der Keramik mindestens 85 % des theoretischen Wertes beträgt. Das Formteil wird dadurch hergestellt, daß eine Mischung, die aus einer Polymerkomponente in einer Menge von 30 bis 80 Gew.-%, bezogen auf das Gesamtgewicht der Mischung, Füllstoffen in einer Menge von 0 bis 30 Gew.-% und Graphit in einer Menge von 10 bis 70 Gew.-% zusammengesetzt ist, in einem Formgebungsprozess unter Erwärmung zur Vernetzung der Polymerkomponenten gebracht und anschließend einem Pyrolyseprozess ausgesetzt wird. Insbesondere werden die Formteile aus Polymeren der Gruppe Polysilane, Polysiloxane, Polysilazane oder Polycarbosilane hergestellt.

## Beschreibung

Die vorliegende Erfindung betrifft ein Formteil aus von Polymeren abgeleiteter Keramik, ein Verfahren zu seiner Herstellung durch Pyrolyse und seine Verwendung als Gleitelement.

Die Herstellung keramischer Werkstoffe durch Pyrolyse geeigneter polymerorganischer Praecursoren ist aus zahlreichen Publikationen bekannt. Als polymerorganische Praecursoren werden üblicherweise Polysilane, Polycarbosilane, Polysilazane, Polysiloxane oder ähnliche Verbindungen bevorzugt. Stellvertretend für viele sei hier auf die Publikation von Seyfert et al. in J.Am.Ceram.Soc (1984) C-132 unter dem Titel "High Yield Synthesis of Si₃N₄/SiC Ceramic Materials by Pyrolysis of a Novel Polyorganosilazane" verwiesen, wo beschrieben ist, dass Alkylchlorsilane mit Ammoniak in Gegenwart einer starken Lewis-Base umgesetzt werden und so als Vorstufe zur Herstellung von Siliziumnitridkeramik dienen.

Die Pyrolyse von Siloxanen ist von D. White in Adv. Ceramic Materials, 2 [1] (1987) S. 45 ff, beschrieben und führt unter Inertgas oder in reduzierender Atmosphäre zu Siliziumcarbid (SiC) enthaltenden Produkten.

Das Problem bei der Herstellung von massiven Formteilen aus solchen Materialien war allerdings immer die Freisetzung von flüchtigen Zersetzungsprodukten während der Pyrolyse, die zu hohen Porositäten und einer mit einer deutlichen Dichteerhöhung einhergehenden drastische Schwindung des Materials führt.

Nach der Lehre der EP-A-0 412 428 werden Formteile mit hoher Dichte hergestellt, indem eine Mischung aus siliziumorganischem Polymer plus metallischem Füllstoff pyrolysiert wird. Mit dieser Methode lässt sich eine keramische Umwandlung, die mit einer Erhöhung der Dichte einhergeht, erreichen, die zu einer Reduzierung der störenden Porosität und der in der Praxis ebenfalls sehr unangenehm hohen Schwindung führt. Dabei ist es möglich, mit Hilfe der für Kunststoffe bekannten Formgebungstechniken Formteile herzustellen. Diese haben allerdings keine befriedigenden Trockenlaufeigenschaften, um sie als Gleitelemente in Mischreibungs- oder Trockenlaufanwendungen einzusetzen.

Gleitelemente mit den besten bisher erreichten Trockenlaufeigenschaften bestehen vorzugsweise aus Kohlegraphit, z.B. der Marke EK 2230 der SGL CARBON GmbH, die als Gegenlaufpartner ein SiC- Element aufweisen. Diese Gleitelemente lassen sich als Einzelpresslinge herstellen, bei denen noch eine abschließende mechanische Endbearbeitung der Laufflächen erfolgt. Der Fertigungsaufwand hierfür ist deutlich höher als wenn man sie mit herkömmlichen Kunststoffformgebungsverfahren fertigen könnte. Hergestellt werden Kohlegraphitwerkstoffe, indem feste kohlenstoffhaltige Füllstoffe, die mindestens zum Teil graphitischer Natur sind (z. B. Naturgraphit, Elekrographit) mit carbonisierbaren Bindemitteln wie Pechen und Harzen gemischt, verpresst und danach bei Temperaturen zwischen 750 °C und 1300 °C unter Luftabschluss carbonisiert werden.

Auch Gleitringe aus keramischen Werkstoffen wie z.B. gesintertes Siliziumcarbid sind bekannt. Diese Werkstoffe gemäß EP 685 437 können allerdings nur im Fall von Mischreibung eingesetzt werden und beruhen darauf, dass das Material eine hohe Porosität aufweist, so dass sich der üblicherweise zwischen den Reibpartnern sich befindende Schmierfilm in die Poren der Gleitringe setzt und bei einem kurzzeitigen Trockenlauf der in den Poren verbliebene Schmierfilm freigesetzt wird, um ein echtes Trockenlaufen zu vermeiden. Durch die Zugabe von Festschmierstoffen wie bevorzugt Graphit gemäß EP 709 352 können die Reibwerte der Gleitringe weiter verbessert werden, allerdings bleibt der Einsatz der Gleitringe trotzdem auf den Fall der Mischreibung beschränkt. Das Problem der Trockenreibung ist mit einem derartigen Werkstoff nicht zu lösen, da erst die zu mindestens zeitweise Anwesenheit eines Schmierfilms das gute Gleitverhalten des Werkstoffs ermöglicht. Belegt wird dieses Verhalten auch weiter durch die Ergebnisse der in der Tabelle 2 angegebenen Referenzmessung mit SiC.

In WO 99/41211 wird ein Verfahren zur Herstellung rissfreier, hochdichter keramischer Formteile auf der Basis von Si/B/C/N beschrieben aus Polysilazanen, die für tribologische Zwecke eingesetzt werden können. Je nach Zusammensetzung weist der Werkstoff der Formteile hierbei eingelagerte Ausscheidungen von unterschiedlichen schmierenden Stoffen wie z.B. Graphit, Bornitrid, Titanoxide und Titancarbidnitrid auf. Hierbei wird ein vernetztes Polysilazanpulver bei einer definierten Temperatur, die höher ist als der Temperaturmaximalwert im TMA-Diagramm des optimal vernetzten Polymers, zunächst heiß in einem Gesenk verpresst und anschließend pyrolisiert. Die kostengünstigen Fertigungsverfahren der Kunststofftechnik zur Formgebung wie z.B. Spritzgießen und Extrudieren können nicht zur Herstellung der Formteile verwendet werden. Die für die Herstellung verwendeten Polysilazane sind zudem wesentlich teurer als andere polymerorganische Praecursoren wie insbesondere Polysiloxane und erhöhen hierdurch zusätzlich die Kosten für die Formteile. Die nach WO 99/41211 hergestellten Formteile wiesen im Trockenlauf Reibbeiwerte bis unter 0,1 auf.

Aufgabe der vorliegenden Erfindung war es nun, mit Hilfe der Fertigungsmethoden der Kunststofftechnik herstellbare Formteile aus von Polymeren abgeleitete Keramik zu schaffen, die neben einer hoher Dichte von mindestens 85 % des theoretischen Wertes eine niedrige Schwindung von höchstens 10 % während der Herstellung ausweist, wobei die Formteile zufriedenstellende Trockenlaufeigenschaften ausweisen.

Eine weitere Aufgabe bestand darin, Formteile aus einer Keramik zu schaffen, die für Trockenlaufanwendungen als Lager und Gleitringdichtungen eingesetzt werden können und aus kostengünstigen polymerorganische Praecursoren als Rohstoff, wie insbesondere Polysiloxane, hergestellt werden können.

Eine andere Aufgabe der vorliegenden Erfindung besteht darin, ein Werkstoff für Formteile anzugeben, der gegenüber den bekannten Materialien eine bessere Eignung als Werkstoff für Lager und Gleitringdichtungen im Trockenlaufeinsatz aufweist.

Gelöst wird diese Aufgabe durch Formteile aus einer von Polymeren abgeleitete Keramik, die als Verbundkörper eine ein- oder mehrphasige, amorphe, teilkristalline oder kristalline Matrix aus Siliziumcarbid (SiC), Siliziumnitrid (Si₃N₄), Silizumdioxid (SiO₂) oder aus Mischungen davon, wie z.B. aus Oxicarbiden, Oxynitriden, Carbonitriden und/oder Oxycarbonitriden aufweist, wobei die Matrix Graphiteinlagerungen beinhaltet und die Dichte der Keramik mindestens 85 % des theoretischen Wertes beträgt.

Zur Herstellung der erfindungsgemäßen Formteile wird zunächst eine Mischung hergestellt, die neben der Polymerkomponente in einer Menge von 30 bis 80 Gew.-%, bezogen auf das Gesamtgewicht der Mischung Füllstoffe in einer Menge von 0 bis 30 Gew.-% und zusätzlich Graphit in einer Menge von 10 bis 70 Gew.-% enthält. Nach einem Formgebungsprozess, bei dem eine Erwärmung der Mischung zur Vernetzung der Polymerkomponenten führt, erfolgt abschließend ein Pyrolyseprozess zur Herstellung der keramischen Formteile.

Als Polymerkomponente werden erfindungsgemäß insbesondere die im Stand der Technik an sich bekannten Polysilane, Polysiloxane, Polysilazane oder Polycarbosilane oder ähnliche Verbindungen und Mischungen davon eingesetzt. Bevorzugt werden hierbei die kostengünstigen Polysiloxane eingesetzt, die zu oxidischen Phasen in der Matrix der keramischen Verbundwerkstoffe führen. Besonders bevorzugt wird als Polymerkomponente erfindungsgemäß Methylhydroxylpolysesquisiloxan mit einer Bruttoformel von (CH₃)SiO_{1,5} und einer mittleren Molmasse im Bereich von 20 000 g/Mol eingesetzt. Der Anteil der Polymerkomponente an der Mischung, aus der die erfindungsgemäßen keramischen Formteile hergestellt werden, beträgt bevorzugt 40 Gew.-% bis 70 Gew.-%, besonders bevorzugt von 50 Gew.-% bis 60 Gew.-%.

Als Füllstoffe eignen sich erfindungsgemäß bevorzugt hochdichte Füllstoffe wie metallisches Silizium, Aluminium, Zirkonium, Hafnium, Vanadium, Niob, Tantal, Chrom, Molybdän, Wolfram, Titan oder elementares Bor oder Legierungen aus Molybdän und Silizium oder aus Chrom und Silizium. Auch sind Lanthaniden und/oder intermetallische Verbindungen der vierten bis sechsten Nebengruppe des Periodensystems mit Bor, Silizium und/oder Aluminium einsetzbar, sowie Mischungen der beschriebenen Füllstoffe. Außerdem kann es auch zweckmäßig sein, anstelle der Füllstoffkomponenten metallorganische Verbindungen und/oder Vorstufen, wie z.B. Alkyle, Cycloalkyle, Aryle, Akoxide und/oder salzartige Verbindungen wie z.B. Hydride oder Oxide der Metalle und/oder intermetallischen Verbindungen einzusetzen. Besonders bevorzugte Füllstoffe sind Bor und Silizium. Die Füllstoffe werden der Pyrolysemischung vorzugsweise in fein verteilter Form zugesetzt, vorzugsweise als trockene Pulver mit einer mittleren Teilchengröße, angegeben als D₅₀-Wert, im Bereich von 1 bis 5 um, gemessen mit Lasergranulometer (Typ Cilas 715). Als Vorzugsmengen der Füllstoffe haben sich in der Praxis insbesondere Mengen von 5 Gew.-% bis 25 Gew.-% an der Mischung, insbesondere 10 Gew.-% bis 20 Gew.-% herausgestellt.

Der eingesetzte Graphit wird bevorzugt in einer Menge von 20 Gew.-% bis 50 Gew.-% der Ausgangsmischung zugegeben. Besonders bevorzugt beträgt der Graphitanteil 30 Gew.-% bis 40 Gew.-% der Mischung. Der eingesetzte Graphit weist bevorzugt eine Dichte im Bereich von 2,0 bis 2,3 g/cm³, besonderes bevorzugt von 2,1 bis 2,2 g/cm³ auf, gemessen mit einem He-Pyknometer. Die mittlere Korngröße (D₅₀) des eingesetzten Graphits liegt im Bereich von 2 µm bis 16 µm, bevorzugt 3 bis 7 µm gemessen mit dem Lasergranulometer (Typ Cilas 715). Erfindungsgemäß optimal geeignete Graphite besitzen zudem eine gute kristalline Ordnung, d.h. eine im wesentlichen gleichmäßige Ausrichtung der Graphitschichten; es können hierbei synthetischer Graphit wie z.B. Elektrographit oder auch Naturgraphit eingesetzt werden.

Völlig überraschend hat sich gezeigt, daß bei der Pyrolyse der vorstehend beschriebenen Pyrolysemischung nicht die gesamte Graphitmenge zur Bildung von Carbiden verbraucht wird, sondern dass der Graphit nahezu vollständig in der von Polymeren abgeleiteten Keramik als Einlagerung erhalten bleibt. Die Herstellung der erfindungsgemäßen Keramik wird unter den folgenden Bedingungen durchgeführt: Die Polymerisierung der Ausgangsmischung erfolgt bei Temperaturen im Bereich von 230 bis 300 °C, die Pyrolyse der Ausgangspoymere erfolgt bei 900 bis 1500 °C, vorzugsweise bei 1000 bis 1200 °C, unter Inertgas wie Argon oder reinem Stickstoff oder unter einem Stickstoff/ Wasserstoff-Gemisch über eine Zeitdauer von 30 bis 60 Stunden. Der im Material eingelagerte Graphit kann als hochaktives Schmiermittel in dem Fall wirken, wenn als erfindungsgemäßes Formteil aus von Polymeren abgeleiteten Keramik Gleitringe oder Dichtscheiben hergestellt werden und bei diesen die herkömmliche Schmierung durch von außen zugeführte Schmiermittel ausfällt und Trockenlauf eintritt. Die o.g. Formteile werden hauptsächlich im Fall der Mischreibung betrieben, können jedoch ebenso für reinen Trockenlauf eingesetzt werden. Der Reibbeiwert f als Maß für die Trockenlaufeigenschaften der erfindungsgemäßen Formteile in Anlehnung an DIN 50322 weist im allgemeinen Werte kleiner 0,1 auf, bevorzugt Werte kleiner 0,06 und besonders bevorzugt Werte kleiner 0,045.

Die erfindungsgemäße von Polymeren abgeleitete Keramik eignet sich daher ganz besonders zur Herstellung von Gleitelementen mit Dicht- und/oder Lagerfunktion an beweglichen Teilen in Pumpen, Kompressoren, allgemeinen Maschinen und im Ofenbau, insbesondere für den Trockenlaufeinsatz.

Eine bevorzugte Ausführungsform der erfindungsgemäßen Keramik besteht darin, dass der Ausgangsmischung eine geringe Menge eines Stoffes zugesetzt wird, der als Katalysator den Polykondensationsprozess der verwendeten Polymere induziert. Als Katalysator können hierbei Platingruppenmetalle, Eisen, Kobalt und/oder Nickel, auch in Form von metallorganischen Verbindungen, Vorstufen und salzartigen Verbindungen und Mischungen davon der Ausgangsmischung zugesetzt werden. Hierbei ist ihr Anteil an der Masse der Ausgangsmischung kleiner als 10 %, bevorzugt zwischen 0,2 % und 5 % und besonders bevorzugt zwischen 0,5 % und 1 %. Besonders bevorzugte Katalysatoren sind Metallacetyl-acetonate wie Aluminumacetylacetonat (C₁₅H₂₁AlO₆) und Eisen-acetylacetonat. Der Einsatz der Katalysatoren führt zu einer geringeren Porosität der erfindungsgemäßen Keramik und einer geringeren linearen Schwindung der Keramik während des Pyrolyseprozesses.

Die erfindungsgemäßen Keramiken zeichnen sich durch eine geringe offene Porosität aus, die üblicherweise kleiner als 12 Vol-% ist, bevorzugt kleiner 7 Vol-% und besonders bevorzugt kleiner 4 Vol-%. Außerdem zeichnen sich die erfindungsgemäßen Keramiken durch ein geringes Schwindungsverhalten während des Pyrolyseprozesses aus, wobei die lineare Schwindung üblicherweise kleiner als 10 % ist, bevorzugt kleiner als 7 % und besonders bevorzugt kleiner als 5 % ist.

Zur Formgebung der erfindungsgemäßen von Polymeren abgeleiteten Keramik können alle Verfahren angewandt werden, die sich in der keramischen Technik oder der Kunststofftechnik allgemein bewährt haben. Diese sind druckloses Vergießen, Warmpressen, Spritzgießen, Extrudieren oder neuerdings auch lasergestütztes sogenanntes "rapid prototyping".

Die Erfindung wird durch die nachstehend beschriebenen Ausführungsbeispiele für den Fachmann noch deutlicher erläutert, ohne daraus mögliche Einschränkungen auf die dargestellten Ausführungsformen abzuleiten.

### Beispiel 1

Zunächst wird ein Versatz von 50 g Feststoffen der Massenzusammensetzung 60 Gew.-% Methylhydroxylpolysesquisiloxan (MOHPS NH2100), Hersteller: Nuenchritz GmbH, Deutschland, 10 Gew.-% metallisches Silizium mit einer Dichte von 2,33 g/cm³ und einer mittleren Korngröße (D₅₀) von 3,1 um und 30 Gew.-% aufgemahlenen Graphit U19F300 von SGL CARBON GmbH mit einer mittleren Korngröße (D₅₀) von 3,6 um, (alle Prozentangaben bezogen auf das Gesamtgewicht der Feststoffe) mit 50g Al₂O₃- Kugeln und 70 cm³ Isopropanol hergestellt, der 24 Stunden auf einem Rollenstuhl homogenisiert wird. Anschließend erfolgt eine Trocknung der niedrigviskosen Mischung bei 40 °C in einem Vakuumrotationsverdampfer. Danach wird der hierdurch erhaltene feste Rückstand 2 Minuten auf einer Stahlschwingmühle aufgemahlen und das erhaltene Pulver über ein 100 µm Sieb gesiebt. Die so erhaltene Pulvermischung wird trocken in einer Laminatpresse (Hersteller: Fa. Bürkle, Freudenstadt) unter einem Pressdruck von 10 MPa bei einer Temperatur von 230 °C 45 Minuten lang zu einem Grünkörper der Abmessung 3 mm x 50 mm x 50 mm verpresst und anschließend 90 Minuten drucklos bei 230 °C nachvernetzt. Aus diesen Grünkörpern werden danach mechanisch Probestäbchen der Abmessung 3 mm x 4 mm x 50 mm für die nachfolgenden Untersuchungen gefertigt.

Die Prüfstäbchen wurden danach in einen geschlossenen Ofen eingebracht, der dann zweimal mit Stickstoff gespült wurde. Anschließend wurde der Ofen unter Normaldruck über eine Zeitdauer von 20 Stunden auf eine Temperatur von 1250 °C erhitzt. Diese Temperatur wurde über eine Dauer von 10 Stunden gehalten und dann wurde der Ofen über weitere 10 Stunden wieder abgekühlt. Die Eigenschaften der erhaltenen Keramik sind in der am Ende der Beispiele aufgeführten Tabelle 1 zusammengestellt.

### Beispiel 2

Die Herstellung von Prüfstäbchen des Beispiels 2 entspricht der des Beispiels 1, nur wird den Feststoffen des Versatzes bezogen auf die Gesamtmasse der Feststoffe noch 0,5 % Fe-Acetylacetonat hinzugefügt.

Außerdem werden aus der Mischung in einer Thermopresse (Hersteller: Fa. Jean Wirtz, Düsseldorf) beim gleichen Pressdruck scheibenförmige Prüfkörper mit der Höhe 4 mm und einem Durchmesser von 25 mm für Reibversuche hergestellt. Die Oberfläche der Prüfkörper wurde nach der Ofenentnahme mit einer Güte von 6 um poliert.

Auch hier sind die Eigenschaften in der Tabelle 1 wiedergegeben, sowie das Reibverhalten der erhaltenen Keramik in der Tabelle 2.

### Beispiel 3

Eine Mischung aus 60 Gew.-% MOHPS NH2100 wie in Beispiel 1, 10 Gew.-% elementares Bor mit einer Dichte von 2,27 g/cm³ und einer mittleren Korngröße (D₅₀) von 1,5 µm und 30 Gew.-% aufgemahlenen Graphit U19F300 von SGL CARBON GmbH, mit einer mittleren Korngröße (D₅₀) von 3,6 µm, wobei alle Prozentangaben auf das Gesamtgewicht der Mischung bezogen sind, wurde wie in Beispiel 2 zu Prüfstäbchen und scheibenförmigen Prüfkörpern verarbeitet.

Die Prüfkörper wurden dann wie in den vorgehenden Beispielen pyrolysiert und anschließend poliert. Die Eigenschaften ergeben sich aus der nachfolgenden Tabelle 1 und die Reibeigenschaften der erhaltenen Keramik des Beispiels 3 aus der Tabelle 2.

**Tabelle 1**

| Eigenschaft | | Beispiel 1 | Beispiel 2 | Beispiel 3 |
|---|---|---|---|---|
| reaktiver Füllstoff | | Silizium | Silizium | Bor |
| reaktiver Füllstoff | [Gew.-%] | 10 | 10 | 10 |
| Graphit | [Gew.-%] | 30 | 30 | 30 |
| MOHPS | [Gew.-%] | 60 | 60 | 60 |
| Katalysator Fe- Acetylacetonat | [Zusatz Gew.-%] | 0 | 0,5 | 0 |
| Schwindung | [%] | 9 | 6 | 10 |
| Offene Porosität | [Vol.-%] | 6 | 3 | 10 |
| Biegefestigkeit | [MPa] | 95±10 | 50±5 | 60±5 |

Die in der Tabelle 1 angegebenen Werte wurden nach folgenden Messmethoden bestimmt:
Die offene Porosität wurde gemäß DIN 66133 bestimmt.
Die Biegefestigkeit wurde gemäß DIN 51902 bestimmt.

Die nach den Beispielen 1 bis 3 hergestellten Keramiken werden mit den in Tabelle 1 wiedergegebenen Werten charakterisiert. Die Leistungsfähigkeit der Keramiken wird insbesondere beim Vergleich im Reibversuch mit SiC mit solchen Prüfkörpern deutlich, die den heute bekannten Stand der Technik darstellen. Im Trockenlauf und bei einer Drehzahl von 1500 min⁻¹ weisen Kohle-/Graphit-Proben (EK 2230 von SGL CARBON GmbH) bzw. Siliziumcarbid-Proben nach dem Stand der Technik deutlich höhere Reibbeiwerte f und deutlich stärkere Erwärmungen der Prüfkörper auf, als diejenigen der Beispiele 2 und 3, siehe Tabelle 2.

**Tabelle 2**

| Eigenschaft | Beispiel 2 | Beispiel 3 | EK 2230 | SiC |
|---|---|---|---|---|
| Reibbeiwert f nach 20 min Testzeit | 0,05 | 0,04 | 0,08 | 0,20 |
| Erwärmung der Prüfkörper [°C] | 40 | 23 | 47 | 137 |

Die in der Tabelle 2 angegebenen Werte wurden nach folgender Meßmethode bestimmt:
Der Reibbeiwert f als Maß für die Trockenlaufeigenschaften der erfindungsgemäßen Formteile wurde in Anlehnung an DIN 50322 in der tribologischen Anordnung einer axialen Gleitringdichtung bei einer Drehzahl von 1500 min⁻¹, entsprechend einer Gleitgeschwindigkeit von 1,5 m/s, einer Axialkraft, entsprechend einer Normalkraft Fₙ, von 40 N im Gegenlauf zu SiC bestimmt.

## Patentansprüche

1. Formteile aus einer durch die Pyrolyse von Polymeren hergestellten Keramik, die als Verbundkörper eine ein- oder mehrphasige, amorphe, teilkristalline oder kristalline Matrix aus Siliziumcarbid (SiC), Siliziumnitrid (Si₃N₄), Silizumdioxid (SiO₂) oder aus Mischungen davon, wie z.B. aus Oxicarbiden, Oxynitriden, Carbonitriden und/oder Oxycarbonitriden aufweist,
**dadurch gekennzeichnet, dass**
die Matrix Graphiteinlagerungen beinhaltet und die Dichte der Keramik mindestens 85 % des theoretischen Wertes beträgt.

2. Formteile aus einer durch die Pyrolyse von Polymeren hergestellten Keramik gemäß Patentanspruch 1,
**dadurch gekennzeichnet, dass**
die Keramik aus Polymeren der Gruppe Polysilane, Polysiloxane, Polysilazane oder Polycarbosilane hergestellt wird.

3. Formteile aus einer durch die Pyrolyse von Polymeren hergestellten Keramik gemäß Patentanspruch 1 oder 2,
**dadurch gekennzeichnet, dass**
die Matrix der Keramik oxidische Phasen aufweist.

4. Formteile aus einer durch die Pyrolyse von Polymeren hergestellten Keramik gemäß Patentanspruch 2,
**dadurch gekennzeichnet, dass**
die Keramik aus Methylhydroxylpolysesquisiloxan als Polymer hergestellt wird.

5. Formteile aus einer durch die Pyrolyse von Polymeren hergestellten Keramik gemäß mindestens einem der Patentansprüche 1 bis 4,
**dadurch gekennzeichnet, dass**
die Keramik aus einer Mischung hergestellt wurde, die neben den Polymeren in einer Menge von 30 bis 80 Gew.-%, bezogen auf das Gesamtgewicht der Mischung, Füllstoffe in einer Menge von 0 bis 30 Gew.-% und zusätzlich Graphit in einer Menge von 10 bis 70 Gew.-% enthält.

6. Formteile aus einer durch die Pyrolyse von Polymeren hergestellten Keramik gemäß Patentanspruch 5,
**dadurch gekennzeichnet, dass**
die Mischung Graphit in einer Menge von 30 bis 70 Gew.-% enthält.

7. Formteile aus einer durch die Pyrolyse von Polymeren hergestellten Keramik gemäß Patentanspruch 6,
**dadurch gekennzeichnet, dass**
der Anteil der Polymere an der Mischung 40 Gew.-% bis 70 Gew.-%, bevorzugt von 50 Gew.-% bis 60 Gew.-% beträgt.

8. Formteile aus einer durch die Pyrolyse von Polymeren hergestellten Keramik gemäß mindestens einem der Patentansprüche 1 bis 7,
**dadurch gekennzeichnet, dass**
die Graphiteinlagerungen eine Dichte im Bereich von 2,0 g/cm³ bis 2,3 g/cm³, bevorzugt von 2,1 g/cm³ bis 2,2 g/cm³ aufweisen.

9. Formteile aus einer durch die Pyrolyse von Polymeren hergestellten Keramik gemäß mindestens einem der Patentansprüche 1 bis 8,
**dadurch gekennzeichnet, dass**
die mittlere Größe (D₅₀) der Graphiteinlagerungen im Bereich von 2 µm bis 16 µm, bevorzugt 3 µm bis 7 µm liegt.

10. Formteile aus einer durch die Pyrolyse von Polymeren hergestellten Keramik gemäß mindestens einem der Patentansprüche 1 bis 9,
**dadurch gekennzeichnet, dass**
die Graphiteinlagerungen eine im wesentlichen gleichmäßige Ausrichtung der Graphitschichten aufweisen.

11. Formteile aus einer durch die Pyrolyse von Polymeren hergestellten Keramik gemäß mindestens einem der Patentansprüche 1 bis 10,
**dadurch gekennzeichnet, dass**
der Reibbeiwert f der Formteile im Trockenlauf in Anlehnung an DIN 50322 kleiner als 0,1 , bevorzugt Werte kleiner 0,06 und besonders bevorzugt Werte kleiner 0,045 ist.

12. Formteile aus einer durch die Pyrolyse von Polymeren hergestellten Keramik gemäß mindestens einem der Patentansprüche 1 bis 11,
**dadurch gekennzeichnet, dass**
die Keramik eine offene Porosität kleiner als 12 Vol-% aufweist, bevorzugt kleiner 7 Vol-% und besonders bevorzugt kleiner 4 Vol-%.

13. Verfahren zum Herstellen keramischer Formteile nach einem der Patentansprüche 1 bis 12, beinhaltend, dass eine Polymerkomponenten enthaltende Mischung in einem Formgebungsprozess unter Erwärmung der Mischung zur Vernetzung der Polymerkomponenten gebracht wird und einen Pyrolyseprozess zur Herstellung der keramischen Formteile,
**dadurch gekennzeichnet, dass**
die Mischung neben der Polymerkomponente in einer Menge von 30 bis 80 Gew.-%, bezogen auf das Gesamtgewicht der Mischung, Füllstoffe in einer Menge von 0 bis 30 Gew.-% und zusätzlich Graphit in einer Menge von 10 bis 70 Gew.-% enthält.

14. Verfahren zum Herstellen keramischer Formteile gemäß Patentanspruch 13,
**dadurch gekennzeichnet, dass**
die Mischung als Füllstoffe Füllstoffe wie metallisches Silizium, Aluminium, Zirkonium, Hafnium, Vanadium, Niob, Tantal, Chrom, Molybdän, Wolfram, Titan oder elementares Bor oder Legierungen aus Molybdän und Silizium oder aus Chrom und Silizium oder Lanthaniden und/oder intermetallische Verbindungen der vierten bis sechsten Nebengruppe des Periodensystems mit Bor, Silizium und/oder Aluminium und Mischungen davon enthält.

15. Verfahren zum Herstellen keramischer Formteile gemäß Patentanspruch 13,
**dadurch gekennzeichnet, dass**
die Mischung anstelle der Füllstoffe metallorganische Verbindungen und/oder Vorstufen, wie z.B. Alkyle, Cycloalkyle, Aryle, Akoxide und/oder salzartige Verbindungen wie z.B. Hydride oder Oxide der Metalle und/oder intermetallischen Verbindungen davon enthält.

16. Verfahren zum Herstellen keramischer Formteile gemäß mindestens einem der Patentansprüche 12 bis 15,
**dadurch gekennzeichnet, dass**
die Füllstoffe der Mischung in fein verteilter Form zugesetzt werden, vorzugsweise als trockene Pulver mit einer mittleren Teilchengröße D₅₀ im Bereich von 1 bis 5 µm.

17. Verfahren zum Herstellen keramischer Formteile gemäß mindestens einem der Patentansprüche 13 bis 16,
**dadurch gekennzeichnet, dass**
die Mischung bezogen auf das Gesamtgewicht der Mischung Füllstoffe in einer Menge von 5 bis 25 Gew.-%, bevorzugt 10 Gew.-% bis 20 Gew.-% enthält.

18. Verfahren zum Herstellen keramischer Formteile gemäß mindestens einem der Patentansprüche 13 bis 17,
**dadurch gekennzeichnet, dass**
die Mischung bezogen auf das Gesamtgewicht der Mischung Graphit in einer Menge von 20 bis 50 Gew.-%, bevorzugt 30 Gew.-% bis 40 Gew.-% enthält.

19. Verfahren zum Herstellen keramischer Formteile gemäß mindestens einem der Patentansprüche 13 bis 18,
**dadurch gekennzeichnet, dass**
die Mischung als Graphit Elektrographit oder Naturgraphit beinhaltet.

20. Verfahren zum Herstellen keramischer Formteile gemäß mindestens einem der Patentansprüche 13 bis 19,
**dadurch gekennzeichnet, dass**
die Vernetzung der Polymerkomponenten bei Temperaturen im Bereich von 230 bis 300 °C erfolgt.

21. Verfahren zum Herstellen keramischer Formteile gemäß mindestens einem der Patentansprüche 13 bis 20,
**dadurch gekennzeichnet, dass**
der Pyrolyseprozess zur Herstellung der keramischen Formteile bei Temperaturen von 900 bis 1500 °C, vorzugsweise von 1000 bis 1200 °C, unter Inertgas erfolgt.

22. Verfahren zum Herstellen keramischer Formteile gemäß mindestens einem der Patentansprüche 13 bis 21,
**dadurch gekennzeichnet, dass**
der Ausgangsmischung eine geringe Menge eines Stoffes zugesetzt wird, der als Katalysator den Polykondensationsprozess der verwendeten Polymere induziert.

23. Verfahren zum Herstellen keramischer Formteile gemäß Patentanspruch 22,
**dadurch gekennzeichnet, dass**
als Katalysator Platingruppenmetalle, Eisen, Kobalt und/oder Nickel, auch in Form von metallorganischen Verbindungen, Vorstufen oder salzartigen Verbindungen und Mischungen davon der Ausgangsmischung zugesetzt werden.

24. Verfahren zum Herstellen keramischer Formteile gemäß mindestens einem der Patentansprüche 22 und 23,
**dadurch gekennzeichnet, dass**
der Anteil des Katalysators an der Masse der Ausgangsmischung kleiner als 10 Gew.-% ist, bevorzugt zwischen 0,2 Gew.-% und 5 Gew.-% und besonders bevorzugt zwischen 0,5 Gew.-% und 1 Gew.-% liegt.

25. Verfahren zum Herstellen keramischer Formteile gemäß mindestens einem der Patentansprüche 22 bis 24,
**dadurch gekennzeichnet, dass**
als Katalysator Metallacetylacetonate wie Aluminumacetylacetonat (C₁₅H₂₁AlO₆) und Eisenacetylacetonat der Ausgangsmischung zugesetzt werden.

26. Verfahren zum Herstellen keramischer Formteile gemäß mindestens einem der Patentansprüche 22 bis 25,
**dadurch gekennzeichnet, dass**
während des Pyrolyseprozesses die lineare Schwindung der Formteile kleiner als 10 % ist, bevorzugt kleiner als 7 % und besonders bevorzugt kleiner als 5 %.

27. Verfahren zum Herstellen keramischer Formteile gemäß mindestens einem der Patentansprüche 13 bis 26,
**dadurch gekennzeichnet, dass**
als Formgebungsverfahren druckloses Vergießen, Warmpressen, Spritzgießen, Extrudieren oder lasergestütztes "rapid prototyping" durchgeführt wird.

28. Verwendung eines Formteils nach einem der Patentansprüche 1 bis 12 als Gleitelement mit Dicht- und/oder Lagerfunktion an beweglichen Teilen in Pumpen, Kompressoren, allgemeinen Maschinen und im Ofenbau, insbesondere für den Trockenlaufeinsatz.
